(19) Europäisches Patentamt
European Patent Office
Office européen des brevets

(11) Publication number: **0 101 873 B1**

(12) **EUROPEAN PATENT SPECIFICATION**

(45) Date of publication of patent specification: **16.09.87**

(51) Int. Cl.$^4$: **C 08 G 81/02**

(21) Application number: **83106990.1**

(22) Date of filing: **16.07.83**

# (54) Method for modifying unsaturated rubbers and product obtained thereby.

(30) Priority: **27.07.82 US 402398**

(43) Date of publication of application: **07.03.84 Bulletin 84/10**

(45) Publication of the grant of the patent: **16.09.87 Bulletin 87/38**

(84) Designated Contracting States: **DE FR GB IT NL**

(56) References cited:
**EP-A-0 037 124**
**EP-A-0 059 958**
**US-A-3 684 616**

**PATENTS ABSTRACTS OF JAPAN, vol. 6, no. 31(C-92)(909), 24th February 1982**

(73) Proprietor: **GENERAL ELECTRIC COMPANY**
**1 River Road**
**Schenectady New York 12305 (US)**

(72) Inventor: **White, Dwain Montgomery**
**2334 St. Joseph Drive**
**Schenectady, New York 12309 (US)**

(74) Representative: **Schüler, Horst, Dr. et al**
**Kaiserstrasse 41**
**D-6000 Frankfurt/Main 1 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 101 873 B1

**Description**

By synthesizing a polyphenylene oxide using a catalyst comprising a primary or secondary amine, the same can be grafted to an unsaturated rubber at high yield. A process for so modifying an unsaturated rubber and the product obtained thereby are disclosed.

BACKGROUND OF THE INVENTION

The present invention relates to a process for modifying unsaturated rubbers by grafting a polyphenylene oxide thereon, the polyphenylene oxide having been synthesized using a catalyst comprising a primary or secondary amine, and products obtained by said process.

DESCRIPTION OF THE PRIOR ART

Self-condensation reactions of certain phenols employing oxygen in combination with an effective oxidative coupling catalyst system to form monofunctional polyphenylene oxides are well known in the prior art, such polyphenylene oxides typically having an average hydroxyl group per molecule of 1.0 or less. See, e.g., U.S. Patents 3,306,875; 3,914,266; and 4,028,341 Hay and U.S. Patents 3,956,442; 3,965,069; 3,972,851 and 4,054,553 Olander.

In more detail, U.S. Patent 3,306,874 Hay discloses the preparation of self-condensation products of aromatic compounds containing a hydroxy group directly bonded to an aromatic nucleus which comprises reacting such compounds with oxygen in the presence of a dissolved oxygen-carrying intermediate comprising an aliphatic amine-basic cupric salt complex where the amine has at least one hydrogen on the amine nitrogen and products formed thereby. Per the teaching of this patent, however, "the amine does not become an integral part of the reaction product", though recent analyses have shown secondary amines in the catalyst are chemically bound to the polyphenylene oxide, approximately one amino gorup per polyphenylene oxide molecule.

U.S. Patents 3,929,930 and 3,929,931 Izawa et al disclose grafting polystyrene onto an oligophenylene ether using a radical initiator such as an organic peroxide. Since the grafting disclosed in these two patents results from a chemical treatment of a polyphenylene oxide with a peroxide, presumably the peroxide reacts with the polyphenylene oxide to form a reactive site to which styrene can be grafted. Per the present invention, of course, a different functional group in the polyphenylene oxide is used which is present from the time the polyphenylene oxide is made, whereupon grafting to rubber (not styrene monomer) at high temperature can be effected.

U.S. Patent 4,054,553 Olander discloses forming self-condensation products of a phenol under polymer forming reaction conditions to yield a polyphenylene oxide using a mixed manganese chelate complex in the presence of a secondary amine.

U.S. Patent 4,129,555 White discloses a process of forming self-condensation products of an aminophenol and another phenol under polymer forming reaction conditions which comprises contacting an aminophenol and another phenol with oxygen in the presence of an effective oxidative coupling catalyst system.

EP—A—59958 describes the preparation of polyphenylene oxide (PPO) in the presence of manganese compounds and a primary or secondary amine.

EP—A—37 124 discloses the preparation of copolymers of vinyl monomers and of polyphenylene ether copolymers.

SUMMARY OF THE INVENTION

It has been discovered that certain polyphenylene oxides can be grafted to unsaturated rubbers when heated in the molten state, if the polyphenylene oxides have been synthesized with a catalyst comprising a primary or secondary amine.

DESCRIPTION OF THE PREFERRED EMBODIMENTS

According to the present invention there is disclosed a graft copolymer of polyphenylene oxide and an unsaturated rubber produced by a process which comprises heating said polyphenylene oxide and said unsaturated rubber under a pressure and at a temperature for a time sufficient to graft the same, wherein said polyphenylene oxide initially contains a primary or secondary amine, said amine being a component of the catalyst used to form said polyphenylene oxide.

Also disclosed is a process for producing a polyphenylene oxide unsaturated rubber graft copolymer which comprises heating said polyphenylene oxide and said unsaturated rubber at a temperature and pressure for a time sufficient to form said graft copolymer, said polyphenylene oxide initially containing a primary or secondary amine group chemically bound thereto, said amine being a component of the catalyst used to form said polyphenylene oxide.

In general, it is to be noted that the interaction of polyphenylene oxide with an unsaturated rubber as per the present invention differs in several respects from the prior art.

Firstly, chemically bound amine is required for the reaction (possibly generation of a quinone methide intermediate).

Secondly, unsaturated groups in the rubber, are required.

Thirdly, low concentrations of polyphenylene oxide in the unsaturated rubber give more grafting of polyphenylene oxide to unsaturated rubber than high concentrations.

Polyphenylene oxides useful in the present invention include those of the type disclosed in U.S. Patent 3,306,874 Hay, U.S. Patent 4,054,553 Olander and U.S. Patent 4,129,555 White.

It will be appreciated by one skilled in the art, of course, that per the present invention a catalyst comprising a primary or secondary amine utilized to form such polyphenylene oxide and said amine is present as an integral part of the resulting polyphenylene oxide. Accordingly, the immediate following discussion of exemplary polyphenylene oxides useful in the grafting procedure of the present invention is merely in the context of the polyphenylene oxide structure which is formed, with later discussion being directed to incorporation of the primary or secondary amine.

Thus, using starting materials as described in U.S. Patent 3,306,874 Hay, polyphenylene oxides having a molecular structure represented by the formula:

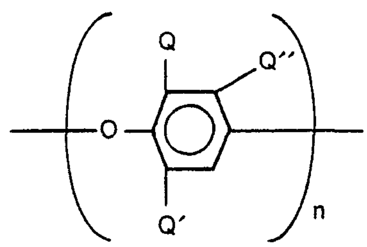

can be used with success herein wherein Q is a monovalent substituent selected from the group consisting of hydrocarbon radicals free of a tertiary α-carbon, hydrocarbonoxy radicals free of a tertiary α-carbon atom, haloaryl radicals wherein all halogens are substituted on aromatic carbon atoms, and haloaryloxy radicals wherein all halogens are substituted on aromatic carbon atoms, Q′ is the same as Q and in addition halogen, and Q″ is the same as Q and in addition hydrogen and halogen, both Q and Q′ cannot be aryl at the same time, and n is an integer of indeterminate value since the resinous products are mixtures of different chain links and the ordinary means of determining molecular weights give an average value. For those materials of low molecular weight, n is an average of 10 to 15 while for the high molecular weight resins having film and fiber forming properties it is 100 to 1,500 or greater.

In a similar fashion, following the teaching of U.S. Patent 4,054,553 Olander, by the reaction of oxygen with a phenol having the structural formula:

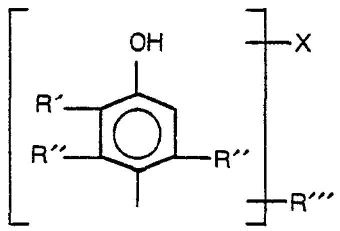

where X is a substituent selected from the group consisting of hydrogen, chlorine, bromine, and iodine; R′ is a monovalent substituent selected from the group consisting of hydrocarbon radicals, halohydrocarbon radicals having at least two carbon atoms between the halogen atoms and a phenol nucleus, hydrocarbonoxy radicals, and halohydrocarbonoxy radicals having at least two carbon atoms between the halogen atom and a phenol nucleus, R″ and R‴ being the same as R′ and, in addition, halogen, one obtains the corresponding polyphenylene oxides.

Finally, with reference to U.S. Patent 4,129,555 White, involving the reaction of an aminophenol and another phenol, aminophenols of the formula below can be reacted with an "another phenol" of the formula below to prepare the corresponding polyphenylene oxides.

Aminophenol reactants include those of the following formula:

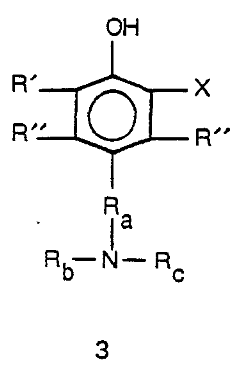

wherein X is hydrogen, chlorine, bromine, or iodine, R′ is hydrogen, a hydrocarbon radical, a halohydrocarbon radical having at least 2 carbon atoms between the halogen atoms and a phenol nucleus, a hydrocarbonoxy radical, or a halohydrocarbonoxy radical having at least two carbon atoms between the halogen atoms and a phenol nucleus, R″ being the same as R′ and, in addition, halogen, $R_a$ being methylene or a substituted methylene hydrocarbon group, including saturated and unsaturated, branched and unbranched, acyclic and cyclic, aromatic and aliphatic hydrocarbon groups, $R_b$ and $R_c$ being acyclic or cyclic — including combinations of $R_b$ and $R_c$ to form a cyclic ring structure(s) — saturated or unsaturated hydrocarbon groups, subject to the proviso that $R_b$ and $R_c$ either alone or in combination do not constitute an aromatic ring structure having an aromatic ring carbon atom directly bonded to the nitrogen atom of the amino group and further subject to the proviso that at least one of $R_b$ and $R_c$ is a hydrocarbon group. Preferably $R_a$ is a divalent alkylene radical, $R_b$ is hydrogen or a primary or secondary alkyl radical, and $R_c$ is a primary or secondary alkyl radical. In a presently preferred embodiment $R_a$ is methylene and $R_b$ and $R_c$ are $C_{1-5}$ primary or secondary alkyl radicals. Generally illustratively, the $R_a$ group can be methylene, ethylidene, isopropylidene, cyclopentylidene, benzylidene, 2,4-cyclohexadien-ylidene, etc., and the $R_b$ and $R_c$ group(s) or combinations thereof are methyl, ethyl, normal propyl, isopropyl, secondary butyl, tertiary butyl, normal hexyl, cyclohexyl, dodecyl, eicosyl, triacontyl, etc.

The "another phenol" can be any of the phenols employed in any of the prior art process for the preparation of polyphenylene oxides. Among the phenols of the prior art defined herein as "another phenol" are those of the following structural formula:

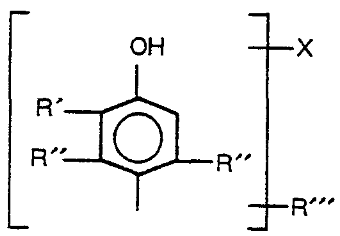

wherein X, R′ and R″ are the same as defined hereinbefore with respect to the aminophenol, R‴ being the same as R′ and in addition, a halogen.

The unsaturated compound(s) onto which the polyphenylene oxide(s) of the present invention is grafted is not particularly limited so long as the unsaturated compound(s) contains double bonds, i.e., saturated compounds are not useful in the present invention.

The number of double bonds present per repeating unit in the unsaturated compound used herein is not particularly limited, but it is generally preferred that there be at least an average of about 0.1 unsaturated bond per repeating unit, and it is most preferred that there be an average of at least 0.3 unsaturated bonds per repeating unit. As one skilled in the art will appreciate, the maximum number of unsaturated bonds per repeating unit is not limited in any fashion, but typically most commercially available unsaturated compounds contain no more than about one unsaturated bond per repeating unit.

Examples of useful unsaturated rubbers include natural rubber (which is of the polyisoprene type), polyisoprene rubbers, polybutadiene rubbers and styrene butadiene rubbers.

The unsaturated rubbers used per the present invention are formed in a conventional fashion as will be apparent to one skilled in the art, i.e., no special modification of commercially available unsaturated rubbers is needed for the same to be used with success in the present invention.

The amount of polyphenylene oxide and unsaturated rubbers can be relatively freely varied, noting that if polyphenylene oxide is present in relatively low amounts the proportion of polyphenylene oxide grafted onto the unsaturated rubber will be greater than if the polyphenylene oxide is present in larger amounts. While not meant to be limitative, generally I prefer to use from about 5 to about 80 parts by weight of polyphenylene oxide and about 20 to about 95 parts by weight of unsaturated rubber, more preferably from 10 to 50 parts of polyphenylene oxide to 50 to 90 parts of unsaturated rubber.

At present, it does not appear that there is any particular special limit on the molecular weight of the polyphenylene oxide used with success in the present invention. The most important criterion that a polyphenylene oxide must exhibit is to have sufficient reaction during the polymerization, i.e., exhibit a sufficiently high molecular weight to have incorporated one amine group per polyphenylene oxide molecule.

However, generally I prefer to use polyphenylene oxides having a relatively high molecular weight, for example, on the order of about 5,000 to about 50,000 (number average molecular weight), more preferably from 10,000 to 30,000 (number average molecular weight).

In a similar fashion, the molecular weight of the unsaturated rubber(s) onto which the polyphenylene oxide of the present invention is grafted is not overly important. However, I believe that better results will be obtained using unsaturated rubber(s) having number average molecular weights from 5,000 to 1,000,000.

As will be apparent to one skilled in the art, it is possible to use one or more unsaturated rubbers, in combination with one or more polyphenylene oxides.

As indicated, the polyphenylene oxide used per the present invention can be prepared according to the disclosures of the above-indicated patents to Hay, Olander and White, and reference should be made to these patents for a detailed discussion of starting materials, catalysts used, reaction systems used, reaction conditions and the like.

It is mandatory, per the present invention, that the polyphenylene oxide used herein be prepared using a catalyst comprising a primary or secondary amine. Said amine must be retained as an integral portion of the resulting polyphenylene oxide prior to grafting onto the unsaturated rubber. A polyphenylene oxide prepared in a similar fashion without using said amine will not undergo extensive grafting as per the present invention.

For example, if a polyphenylene oxide is prepared using a copper catalyst, the catalyst should comprise a primary or secondary amine as in this instance the copper catalyst alone will not produce the active site to provide the preferred grafting degree desired herein.

It is thus most preferred to use a primary or secondary amine/manganese containing catalyst, since in this instance both the amine and manganese will contribute to the grafting effect.

Generally, the catalysts of the present invention will comprise a primary catalyst component and an amine component.

The primary catalyst component utilized is not especially limited and includes those disclosed in U.S. Patent 3,306,874 Hay, U.S. Patent 4,054,553 Olander, U.S. Patent 4,129,555 White and U.S. Patent 3,639,656 Bennett et al.

Thus, exemplary of such primary catalysts are the copper salt based catalysts disclosed in the above Hay patent and the manganese (II) oxime chelate catalyst disclosed in the above Olander patent.

The amounts of primary catalyst used herein are as defined in the above patents to Hay, Olander, White and Bennett et al.

The amount of primary or secondary amine can be freely varied so long as sufficient amine is present in the polyphenylene oxide and bound chemically thereto to provide the desired number of reactive sites.

Usually one or more amines is/are used in an amount of at least about 0.002 mole per mole of monomer present in the reaction system, more preferably in an amount of 0.005 mole to 0.02 mole per mole of monomer present in the reaction system.

Amine must be present in the catalyst system used to form the polyphenylene oxide so as to provide at least one amine group bound chemically per one polyphenylene oxide molecule.

There does not appear, at present to be any particular critical limitations on the identity of the amine utilized. However, it is mandatory, as earlier indicated, that the amine be present in the reaction mixture used to form the polyphenylene oxide per the present invention and the amine be chemically bound to the polyphenylene oxide prior to grafting per the present invention. During the grafting procedure, of course, the amine is stripped from the polyphenylene oxide to provide a reactive site which will react with the unsaturated rubber and provide the desired graft copolymer.

Certain background factors should be kept in mind in selecting the amine, however.

Firstly, extremely bulky amines may be difficult to incorporate in the polyphenylene oxide due to steric hinderance. For example, N,N-di(t-butyl) amine is difficult to incorporate in large quantities into the polyphenylene oxide.

Additionally, aromatic amines are quite often easily oxidized during formation of the polyphenylene oxide, and generally these will not be preferred for use in the present invention unless critical control of reaction parameters can be exercised.

Balancing all of the above factors, a highly preferred class of amines for use in the present invention are those represented by the formula:

$$R—NH—R'$$

wherein R is linear alkyl, branched alkyl, aralkyl or heteroalkyl; R' is the same as R or hydrogen; and wherein R and R' can combine to yield cycloalkyl, cycloaralkyl or cycloheteroalkyl.

Of the above amines, most preferred amines include dibenzylamine, ethylamine, dimethylamine, methylethylamine, butylamine, diethylamine, methylpropylamine, propylamine, dipropylamine, ethoxylethylmethylamine, dibutylamine, di-isopropyl amine, dicyclohexylamine, morpholine, piperazine, piperidine, and a currently most preferred amine for use in the present invention is dibutylamine.

Having thus described the essential components reacted per the present invention, the following discussion deals with process conditions.

*Process Conditions*

The first essential process step per the present invention is to bring the polyphenylene oxide containing the amine and the unsaturated rubber into intimate contact. To this aim the polyphenylene oxide and unsaturated rubber are dissolved in an appropriate solvent for both materials, for example, chloroform and benzene, followed by solvent removal.

While the exact solvent selected will depend upon the exact polyphenylene oxide and unsaturated

rubber being used, such can easily be determined by one skilled in the art. Useful solvents include, for example, aromatic solvents such as benzene, toluene, xylene and chlorobenzene, haloalkanes such as chloroform, trichloroethane and trichloroethylene, cyclic ethers such as tetrahydrofuran and dioxane, and compounds such as carbon disulfide.

The amount of polyphenylene oxide and unsaturated rubber dissolved in the solvent is not overly important, but for ease of processing usually the total amount of polyphenylene oxide and unsaturated rubber is from about 5 to about 15 parts based on 100 parts by weight of the solvent.

After the dissolution is effected, the resulting intimate mixture of polyphenylene oxide and unsaturated rubber is typically co-precipitated into an appropriate solvent, such as methanol and then washed and dried.

The co-precipitation solvent is not limited to methanol, of course, and other co-precipitation solvents such as lower hydrocarbons, e.g., pentane, hexane and heptane, lower ketones such as acetone and methylethylketone, alcohols such as ethanol and propanol, nitroalkanes such as nitromethane and nitroethane, nitriles such as acetonitrile and propionitrile, water, and dilute acids can be used with success, if the solvent is miscible with water (e.g. tetrahydrofuran).

One skilled in the art will easily be able to determine appropriate solvents and co-precipitation solvents for any particular polyphenylene oxide/unsaturated rubber system.

It is important, in the above procedure, that the polyphenylene oxide not be heated to a temperature near its glass transition temperature or higher prior to grafting per the present invention. I have discovered that if the polyphenylene oxide has been heated to a temperature close to its glass transition temperature, for example, to a temperature about 10°C lower than the glass transition temperature or higher, grafting is substantially reduced.

For reasons which are not entirely clear, preheating the polyphenylene oxide prior to the grafting procedure of the present invention drastically decreases the reactivity of the polyphenylene oxide; however, I believe that this is due to activating reactive sites in the polyphenylene oxide, causing the same to graft to polyphenylene oxide.

It is most preferred per the present invention to effect grafting in a mold at elevated pressure using a temperature close to or in excess of the glass transition temperature of the polyphenylene oxide.

The exact pressure selected is not overly important so long as proper plastic flow results during the molding. For commercial grade products, of course, the pressure should be sufficient to ensure that bubbles and streaks are removed from the system. For example, pressures on the order of about 70,3 bar to about 1406 bar can be used with success, more preferably from 160,6 bar to 703 bar.

In a similar fashion, temperature can be relatively freely selected so long as the secondary amine is liberated from the polyphenylene oxide to provide the desired reactive intermediate which will react with the unsaturated rubber. Generally, temperatures along the line of about 250°C to about 350°C, more preferably 270 to 330°C, are used.

Finally, the time of molding (curing) is relatively unimportant since the grafting reaction proceeds very rapidly. Usually times on the order of about 0.5 minute to about five minutes can be used with success, more preferably 1 to 2 minutes.

In order that those skilled in the art may better understand my invention, the following Examples are given which are illustrative of the currently preferred best modes of practicing the invention. All parts are by weight unless otherwise stated.

*General Procedure*

The polyphenylene oxide materials used were prepared following the procedure of Example 7 of U.S. Patent 4,092,294 Bennett (copper/diamine), Example 1 of U.S. Patent 3,661,848 Cooper (copper/dibutylamine) when hydrolytically stable catalysts were used and by Procedure A of U.S. Patent 4,129,555 White when manganese/benzoin oxime catalysts were used.

In the Run using a catalyst per procedure A of U.S. 4,129,555 White, in addition to the 2,6-dimethylphenol in the reaction mixture 1 mole percent of 3,5-dimethyl-4-(N,N-diethylaminomethyl)phenol was used as a comonomer.

The polyphenylene oxides obtained had the number average molecular weights and contained amine unit(s) per polyphenylene oxide molecule as indicated in the following Table where DBA means dibutylamine and the diamine was a mixture of N,N′-di-t-butyl-1,1,2-ethylene diamine and dimethylbutylamine.

TABLE I

| Catalyst | Polyphenylene Oxide | No. Avg. Molec. Wt. | No. of Amine Units Per Molecule |
|---|---|---|---|
| Cu/DBA | U.S. Pat. 3,661,848 | 20,000 | *ca.* 2.0 |
| Cu/diamine DBA | U.S. Pat. 4,092,294 | 15,000 | *ca.* 0.8 |
| Mn/DBA | U.S. Pat. 4,129,555 | 15,000 | *ca.* 0.7 |

The unsaturated rubbers were commercially obtained. The styrene butadiene (SBR) was a random copolymer composed of 5% styrene and 95% butadiene obtained from Cellomer Associates, had a number average molecular weight of 65,000 (PS calibration) and contained one double bond per repeating butadiene unit and the syndiotactic-1,2-polybutadiene (PBD) was obtained from JSR America, was 92% syndiotactic and had a number average molecular weight of 121,000 (PS calibration).

*Polyphenylene Oxide/Rubber Grafting*

The procedure used to graft the polyphenylene oxide on SBR and PBD was identical, and accordingly both are referred to merely as "rubber".

Standard solutions of rubber and polyphenylene oxide were formed by dissolving 5 g of rubber in 50 ml of chloroform and 5 g of poly(2,6-dimethyl-1,4-phenylene oxide) in 50 ml by chloroform. The rubber solution was filtered to remove any rubber that was insoluble in chloroform.

Desired portions of the rubber solution and the polyphenylene oxide solution were then combined to give a composition as indicated in the Table below (for PPO and SBR) and then 10 ml of the desired composition was added to 100 ml of vigorously stirred methanol to form chopped strands of the blend. For brevity, hereafter polyphenylene oxide is often abbreviated PPO.

The resulting blends were then dried at 50°C to constant weight, and portions of the blends were analyzed by NMR to confirm the composition thereof.

TABLE II

| ml of PPO Solution | ml of SBR Solution | Composition of Precipitated Blend (wt.%) | |
|---|---|---|---|
| | | PPO | SBR |
| 9.0 | 1.0 | 92.8 | 7.2 |
| 7.5 | 2.5 | 81.1 | 18.9 |
| 2.5 | 7.5 | 32.3 | 67.7 |
| 1.0 | 9.0 | 13.7 | 86.3 |

The blends were then pressed (in an amount slightly less than 1 g per sample) in a Carver press between tetrafluoroethylene coated aluminum sheets which were between two ferrotype plates. The blend samples were placed between preheated platens and allowed to come to temperature over a 30 second period. Thereafter, pressure (351 bar) was applied and after 2 minutes at the desired temperature (270 or 280°C) the sample was removed and cooled rapidly to 25°C. It is to be noted in this regard that the cooling rate is not critical as once the temperature drops below 200°C the sample rapidly cools below 200°C simply by removing the same from the press and the plates.

The resulting flexible films of a thickness of 0,12—0,20 mm were then weighed and then extracted in a stirred chloroform vat at 25°C. The chloroform was replaced with fresh chloroform at intervals of 3 hours. After overnight extraction, the extracted films were dried and weighed.

Control samples of re-precipitated rubber, i.e., the rubber was dissolved in chloroform and precipitated with methanol before pressing without polyphenylene oxide addition, and blends of the SBR and PBD with polyphenylene oxide were also pressed into films under identical conditions to determine the percentage of gelation in the rubber. The SBR control sample which had been processed at 270°C for 2 minutes at 351 bar contained 85% insoluble gel and the PBD control sample which had been processed at 270°C for 2 minutes at 351 bar contained 81% insoluble gel.

Example I

*Polyphenylene Oxide/Rubber Grafting* A blend of PPO from U.S. 3,661,848 — Cooper, (Example 1; contains 2000 ppm bound nitrogen, [η] 0.51 dl/g) and SBR was prepared by adding a solution of 5.0 g PPO in 50 ml chloroform and 5.0 g SBR in chloroform (filtered to remove insoluble SBR) to a liter of methanol in a mechanical blender. The precipitate was dried in a vacuum oven at 80°C. NMR analysis showed 58 ± 2% PPO and 42 ± 2% SBR, by weight. A portion was compression molded at 270°C (0.5 min. preheat, 2 min. at 351 bar) to produce a translucent film 0,15 mm thick. The film was extracted exhaustively with chloroform and then dried.

From the weight of the extracted film and correcting for 15% of the SBR being soluble after heating at 270°, the gelled film still contained 41% of the total PPO. The presence of PPO in the gel was confirmed by measurement of the IR spectrum and by proton NMr spectroscopy of a deuterochloroform swelled sample.

Polyphenylene oxides do not form a gel when heated at 270°C whereas unsaturated rubbers do. Since there was too much gel to be due to the rubber alone, some polyphenylene oxide was thus also present in the gel. For polyphenylene oxide to be in the gel, it had to be chemically bound to the rubber, i.e., grafted. Any ungrafted polyphenylene oxide was dissolved from the gel.

Thus, for example, if an unsaturated rubber is heated alone at 270°C, a crosslinked gel results. On the other hand, when heating a polyphenylene oxide alone at the same temperature, while molecular weight increases, there is no gelation. Finally, when heating a polyphenylene oxide and a rubber in combination at the same temperature, a crosslinked gel results having a greater weight than if rubber alone is present. The gel will contain polyphenylene oxide if the polyphenylene oxide has reactive sites. If the polyphenylene oxide does not have reactive sites, there will be no polyphenylene oxide in the gel.

The quantity of polyphenylene oxide in the extracted films was determined by the weight difference of the films before and after extraction (after correcting for the soluble rubber fraction), and the presence of polyphenylene oxide in the films was also confirmed qualitatively by IR and semi-quantitatively by broadline NMR studies on deuterochloroform swollen gels.

Example II

Following the procedure of Example I and using polyphenylene oxide, SBR and PBD as described for Example 1, polyphenylene oxide was grafted onto SBR and PBD while varying the percentage of polyphenylene oxide in the blend.

The results set forth in the Table below were obtained.

TABLE IV

| | % of Total Polyphenylene Oxide Grafted to Gelled Rubber | | |
|---|---|---|---|
| Type of rubber | SBR | PBD | |
| Reaction Temp. / Time | 270° 2 min. | 270° 2 min. | 280° 2 min. |
| Wt.% PPO in Blend | | | |
| 93 | 6 | — | — |
| 81 | 15 | — | — |
| 50 | 47 | 29 | 33 |
| 40 | — | 40 | 45 |
| 32 | 76 | — | — |
| 30 | — | 54 | 77 |
| 20 | — | 80 | 97 |

Not only is the amount of grafting found to vary with temperature and type of rubber, but also with the ratio of PPO to rubber. The results indicate that there is a competition between an activated PPO molecule to combine either with another PPO molecule or with a rubber molecule. At low PPO concentrations grafting to rubber is the major process.

Example III

Following the procedure of Example I, polyphenylene oxides as described below the SBR as was used in Example I were grafted as described in Example I. The results are set forth in the Table below.

Samples A to G were formed as follows:

Samples A and B (before heating: bound N, 2000 ppm; [η] 0.51 dl/g) per Example 1 of U.S. Patent 3,661,848:

Samples C (bound N, 811 ppm; [η] 0.61 dl/g), D (bound N, 828 ppm; [η] 0.61 dl/g) and E per Exammple 7 of U.S. Patent 4,092,294;

Sample F (bound N, 215 ppm; [η] 0.56 dl/g) was the same as the control for procedure A of U.S. Patent 4,129,555 and Sample G (bound N, 1110 pm; [η] 0.50 dl/g) was formed per procedure A of U.S. Patent 4,129,555.

For Samples C and D, the quantity of DBA was 1% by weight of the weight of the monomer. For Sample G the quantity of co-monomer was 1 mole% of the total monomer.

TABLE V
Polyphenylene oxide-SBR (1:1 w/w)
Reaction at 270° (2 min.)

| Sample | PPO | % of Initial PPO Grafted to Gelled SBR |
|---|---|---|
| A | Made with Cu/DBA* catalyst | 47 |
| B | Same as A except preheated to 270° before blending | 9 |
| C | Made with Cu/diamine + DBA catalyst; isolated by methanol ppt'n | 31 |
| D | Same as C except isolated by steam ppt'n | 28 |
| E | Same as C except without DBA in the catalyst | 0 |
| F | Made with Mn/benzoinoxime catalyst | 34 |
| G | Same as E but with 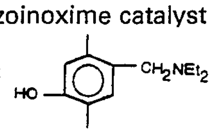 as a co-monomer | 53 |

*DBA = dibutylamine.

These data indicate that polyphenylene oxide only grafts well with an unsaturated rubber such as SBR if the polyphenylene oxide has not been previously heated to temperatures near 270°C.

**Claims**

1. A process for producing a polyphenylene oxide-unsaturated rubber graft copolymer, comprising,

(1) forming a polyphenylene oxide having an amide bonded thereto by oxidatively coupling at least one phenol in the presence of a catalyst which includes at least one amine selected from primary and secondary amines,

(2) forming a solution of the obtained polyphenylene oxide and at least one unsaturated rubber, and subsequently separating an intimate mixture of the polyphenylene and the rubber from the solution, and

(3) heating the obtained mixture at 250°C to 350°C under a pressure of 70 kg/cm to 1,400 kg/cm (1000 to 20000 psig) for a time sufficient to form a graft copolymer, provided that the temperature of the polyphenylene oxide is maintained at at least 10°C below its glass transition temperature prior to grafting.

2. The process of claim 1, wherein said amine has the formula R—NH—R′ wherein R is linear alkyl, branched alkyl, aralkyl or heteroalkyl, R′ can be the same as R and in addition H and R and R′ can combine to form a cycloalkyl, cycloaralkyl or cycloheteroalkyl group.

3. The process of claim 1, wherein said amine is selected from the group consisting of ethylamine, dimethylamine, dibenzylamine, methylethylamine, butylamine, ethylpropylamine, propylamine, dipropylamine, ethoxyethylamine, dibutylamine, diisopropylamine, dicyclohexylamine, morpholine, piperazine and piperidine.

4. The process of claim 1, wherein the time is from about 0.5 to about 5 minutes.

5. The process of claim 1, wherein the unsaturated rubber is selected from the group consisting of natural rubber, polyisoprene rubbers, polybutadiene rubber and styrene butadiene rubbers.

6. The process of claim 1, wherein about 5 to about 80 parts by weight of polyphenylene oxide is present with about 20 to about 95 parts by weight of unsaturated rubber compound.

7. The process of claim 1, wherein the polyphenylene oxide has a number average molecular weight of from about 5,000 to about 50,000.

8. The process of claim 1, wherein the unsaturated rubber has a number average molecular weight of from 5,000 to 1,000,000.

9. The process of claim 1, wherein one or more amines is/are used in amount of 0.005 mol to 0.02 mol per mol of monomers used to form the polyphenylene oxide.

**Patentansprüche**

1. Verfahren zur Herstellung eines Polyphenylenoxid-ungesättigten Gummipfropfcopolymeren umfassend

(1) die Bildung eines Polyphenyloxids mit einem daran gebundenen Amin durch oxidative Kupplung von wenigstens einem Phenol in Anwesenheit eines Katalysators, der zumindest ein Amin ausgewählt aus primären und sekundären Aminen umfaßt,

(2) Bildung einer Lösung des erhaltenen Polyphenylenoxids und wenigstens eines ungesättigten Gummis und anschließende Abtrennung einer innigen Mischung des Polyphenylenoxids und des Gummis aus der Lösung und

(3) Erhitzen der so erhaltenen Mischung für eine ausreichende Zeitdauer bei 250 bis 350°C unter einem Druck von 70 kg/cm bis 1400 kg/cm (1000 bis 20 000 psig) zur Bildung eines Pfropfcopolymeren mit der Maßgabe, daß die Temperatur des Polyphenylenoxids vor dem Pfropfpolymerisieren wenigstens 10°C unter ihrer Glasübergangstemperatur gehalten wird.

2. Verfahren nach Anspruch 1, worin das Amin die Formel R—NH—R′ aufweist, worin R ein lineares Alkyl, verzweigtes Alkyl, Aralkyl oder Heteroalkyl ist, R′ die gleiche Bedeutung wie R hat und zusätzlich H sein kann und R und R′ miteinander verbunden sein können, um eine Cycloalkyl-, Cycloaralkyl-oder Cycloheteroalkylgruppe zu bilden.

3. Verfahren nach Anspruch 1, worin das Amin ausgewählt ist aus der Gruppe bestehend aus Äthylamin, Dimethylamin, Dibenzylamin, Methyläthylamin, Butylamin, Äthylpropylamin, Propylamin, Dipropylamin, Äthoxyäthylamin, Dibutylamin, Diisopropylamin, Dicyclohexylamin, Morpholin, Piperazin und Piperidin.

4. Verfahren nach Anspruch 1, bei dem die Zeitdauer etwa 0,5 bis etwa 5 Minuten beträgt.

5. Verfahren nach Anspruch 1, worin das ungesättigte Gummi ausgewählt ist aus der Gruppe bestehend aus Naturgummi, Polyisoprengummis, Polybutadiengummis und Styrolbutadiengummis.

6. Verfahren nach Anspruch 1, worin etwa 5 bis etwa 80 Gewichtsteile des Polyphenylenoxids mit etwa 20 bis etwa 95 Gewichtsteilen der ungesättigten Gummiverbindung vorhanden sind.

7. Verfahren nach Anspruch 1, worin das Polyphenylenoxid ein zahlengemitteltes Molekulargewicht von etwa 5 000 bis etwa 50 000 aufweist.

8. Verfahren nach Anspruch 1, worin das ungesättigte Gummi ein zahlengemitteltes Molekulargewicht von 5 000 bis 1 000 000 aufweist.

9. Verfahren nach Anspruch 1, worin ein oder mehrere Amine in einer Menge von 0,005 Mol bis 0,02 Mol pro Mol des für die Bildung des Polyphenylenoxids verwendeten Monomeren benutzt wird bzw. werden.

**Revendications**

1. Un procédé pour la production d'un copolymère greffé de polyphénylène oxyde-caoutchouc insaturé comprenant

(1) la formation d'un polyphénylène oxyde ayant une amine qui lui est liée par couplage par oxydation d'au moins un phénol en présence d'un catalyseur qui comprend au moins une amine choisie parmi les amines primaires et secondaires,

(2) formation d'une solution du polyphénylène oxyde obtenu et d'au moins un caoutchouc insaturé puis séparation d'un mélange intime du polyphénylène oxyde et du caoutchouc de la solution et

(3) chauffage du mélange obtenu entre 250°C et 350°C sous une pression de 70 kg/cm à 1 400 kg/cm (1 000 à 20 000 psig) pendant un temps suffisant pour former un copolymère greffé, sous réserve que la température du polyphénylène oxyde soit maintenue à au moins 10°C en dessous de sa température de transition vitreuse avant le greffage.

2. Le procédé de la revendication 1 dans lequel ladite amine a pour formule R—NH—R′ dans laquelle R est un alkyle linéaire, un alkyle ramifié, un aralkyle ou un hétéroalkyle, R′ peut être le même que R et peut de plus être H et R et R′ peuvent être combinés pour former un groupe cycloalkyle, cycloaralkyle ou cyclohétéroalkyle.

3. Le procédé de la revendication 1 dans lequel ladite amine est choisie dans le groupe constitué par l'éthylamine, la diméthylamine, la dibenzylamine, la méthyléthylamine, la butylamine, l'éthylpropylamine, la propylamine, la dipropylamine, l'éthoxyéthylamine, la dibutylamine, la diisopropylamine, la dicylohexylamine, la morpholine, la pipérazine et la pipéridine.

4. Le procédé de la revendication 1 dans lequel le temps est d'environ 0,5 à environ 5 minutes.

5. Le procédé de la revendication 1 dans lequel le caoutchouc insaturé est choisi dans le groupe constitué par un caoutchouc naturel, les caoutchoucs de polyisoprène, les caoutchoucs de polybutadiène et les caoutchoucs de styrène-butadiène.

6. Le procédé de la revendication 1 dans lequel environ 5 à environ 80 parties en poids de polyphénylène oxyde sont présents avec environ 20 à environ 95 parties en poids de caoutchouc insaturé.

7. Le procédé de la revendication 1 dans lequel le polyphénylène oxyde a une moyenne numérique du poids moléculaire d'environ 5 000 à environ 50 000.

8. Le procédé de la revendication 1 dans lequel le caoutchouc insaturé a une moyenne numérique du poids moléculaire de 5 000 à 1 000 000.

9. Le procédé de la revendication 1 dans lequel une ou plusieurs amines est/sont utilisée(s) en une quantité de 0,005 mole à 0,02 mole par mole des monomères utilisés pour former le polyphénylène oxyde.